# EUROPÄISCHE PATENTSCHRIFT

(11) **EP 0 907 486 B1**
(45) Veröffentlichungstag und Bekanntmachung des Hinweises auf die Patenterteilung: **09.08.2000**
(21) Anmeldenummer: 97924845.7
(22) Anmeldetag: 12.06.1997
(51) Int. Cl.: B29C 45/27

(54) **HEISSKANAL-KOINJEKTIONS-VERTEILERBLOCKANORDNUNG**
HOT RUNNER COINJECTION MANIFOLD BLOCK ARRANGEMENT
DISPOSITIF A BLOC DISTRIBUTEUR DE CO-INJECTION A CANAUX CHAUDS

(30) Priorität: 12.06.1996 CH 147496
(43) Veröffentlichungstag der Anmeldung: 14.04.1999
(73) Patentinhaber: Otto Hofstetter AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Ritscher, Thomas, Dr.Rer.Nat.Dipl.-Chem.
(86) Internationale Anmeldenummer: CH9700233
(87) Internationale Veröffentlichungsnummer: WO9747458

(56) Entgegenhaltungen:
- EP-A- 0 480 223
- DE-A- 2 035 159
- DE-U- 8 709 724
- US-A- 4 043 726
- US-A- 4 588 367

## Beschreibung

Die vorliegende Erfindung betrifft eine Heisskanal-Koinjektions-Verteilerblockanordnung aus mehreren Blockteilen für eine Heissläuferplatte eines Mehrfach-Heisskanal-Koinjektions-Werkzeugs zum Spritzgiessen von mehrschichtigen Formlingen aus Kunststoff gemäss Oberbegriff des Anspruchs 1.

Einer Heißkanal-Koinjektions - Verteilerblockanordnung ist bekannt (siehe z.B. EP-A-0 480 223).

Solche Mehrfach-Heisskanal-Koinjektions-Werkzeuge zum Spritzgiessen von Formlingen aus Kunststoffmaterialien, insbesondere PET-artigen Materialien, sind seit längerem bekannt und finden ihre Verwendung im wesentlichen bei der Herstellung von Vorformlingen, wie sie die Getränkeindustrie für ihre sogenannten PET-Flaschen in grossen Mengen benötigt. Zunehmend besteht das Bedürfnis diese Vorformlinge mehrschichtig auszubilden, um diese bspw. mit rezykliertem Material oder luftundurchlässigen Sperrschichten zu versehen. Damit werden an die Formwerkzeuge aussergewöhnlich hohe Anforderungen gestellt, da bei der Verarbeitung von PET, PEN und deren Copolymeren, sowie von Nylon, EVOH oder ähnlichen Sperrschichtmaterialien, deren unterschiedliches Temperatur- und Förderverhalten unabhängig voneinander berücksichtigt werden muss.

Die hohen Anforderungen an die kontrollierbare Temperaturführung in heissen und druckbelasteten Werkzeugteilen hat zu immer komplizierteren Werkzeugen geführt, die teuer, störanfällig und aufwendig im Unterhalt sind.

Es ist deshalb, bspw. in der EP-0'480'223, eine einfache Konstruktion vorgeschlagen worden, bei welcher statt eines einstückigen Heissläuferverteilerblocks mit getrennten Förderkanälen, zwei hintereinander angeordnete Heissläuferverteilerblocks verwendet werden, die jeweils eine der Kunststoffkomponenten fördern. Damit können die unterschiedlichen Materialien auch mit unterschiedlicher Temperatur in einfacher Weise bis an die Düsen geführt werden. Zwischen diesen voneinander getrennten Heissläuferverteilerblocks sind scheibenartige Muffen eingesetzt, durch welche Kunststoffmaterial und eine Düsenverschlussnadel geführt werden und welche eine gegenseitige laterale Verschiebung der beiden Verteilerblocks in diesem Bereich zulassen, soweit diese Verschiebung durch eine unterschiedliche Temperaturausdehnung der einzelnen Heissläuferverteilerblocks verursacht ist. Darüberhinaus sind zwischen dem kopfplattenseitigen Heissläuferverteilerblock und der Kopfplatte weitere Muffen vorgesehen, durch welche die jeweiligen Düsenverschlussnadeln hindurchragen und welche einen zentral geführten Förderkanal druckdicht abschliessen. Diese Muffen beabstanden den kopfplattenseitigen Block und die Kopfplatte, um diese thermisch voneinander zu trennen und sollen einen durch die Temperaturausdehnung verursachten Axialdruck auffangen.

Leider erweist es sich, dass die vorgesehenen Mittel zum Ausgleich der unterschiedlichen Temperaturausdehnung der beiden Heisskanalverteilerblöcke den mechanischen Anforderungen bei Mehrfach-Werkzeugen mit mehr als 8 Düsen, insbesondere mit 48 oder 96 Düsen, nicht mehr genügen. Bei diesen hochbestückten Mehrfach-Werkzeugen vervielfacht sich die durch die thermische Ausdehnung erzeugte Spannungskraft um die Anzahl der vorhandenen Düsen und führt dazu, dass sich die planparallel zueinander liegenden Einzelblöcke wegen deren seitlicher Fixierung aufbiegen und an den Verbindungsstellen der jeweiligen Förderkanäle lecken, resp. dass die seitlichen Halteschrauben der erhöhten mechanischen Belastung nicht standhalten.

Es ist deshalb Aufgabe der vorliegenden Erfindung eine Heisskanal-Koinjektions-Verteilerblockanordnung zum Spritzgiessen von mehrschichtigen Formlingen und für eine Vielzahl von Spritzdüsen zu schaffen, mit welcher verschiedene Materialkomponenten, die unterschiedliche Schmelz- und Verarbeitungstemperaturen aufweisen können, leckagefrei und verschleissarm bearbeitet werden können. Diese Verteilerblockanordnung soll unterhaltsfreundlich und damit kostengünstig ausgestaltet sein.

Diese Aufgabe wird erfindungsgemäss durch eine Verteilerblockanordnung gemäss Anspruch 1 gelöst.

Zweckmäßige Weiterbildungen der Erfindung sind Gegenstand der abhängigen Ansprüche.

Es ist eine Verteilerblockanordnung vorgesehen, die aus mehreren Blockteilen besteht. Diese Blockteile sind innerhalb einer Heissläuferplatte gleitend abgestützt und gegeneinander verschiebbar gelagert. Dazu sind zwischen den einzelnen Blockteilen gleitende Zwischenstücke vorgesehen und sind zwischen dem kopfplattenseitigen Blockteil und der Kopfplatte beweglich gelagerte Abstützelemente eingesetzt, wobei zwischen diesen Abstützelementen und der Kopfplatte mindestens ein Federelement vorgesehen ist, welches das Abstützelement im kalten Betriebszustand von der Kopfplatte beabstandet. Der durch diese Federelemente erzeugte Abstand erlaubt der gesamten Verteilerblockanordnung eine thermische Ausdehnung, ohne zu untragbaren Spannungszuständen zu führen. Die für die Abdichtung der einzelnen Blockteile resp. Zwischenstücke notwendige Schliesskraft wird von diesem Federlement unabhängig von der jeweiligen Betriebstemperatur erzeugt.

Mit dieser Verteilerblockanordnung können gleichzeitig 48 oder mehr mehrschichtige Formlinge aus Kunststoff gefertigt werden, ohne dass dabei Leckageprobleme oder vorzeitige Verschleisserscheinungen auftreten. Außerdem kann die durch diese hochbestückten Mehrfachwerkzeuge vervielfachte thermische Ausdehnung aufgefangen werden und kann vermieden werden, dass die planparallel zueinanderliegenden Einzelblöcke aufgebogen werden, resp. deren seitliche Halteschrauben abscheren.

Ferner lassen sich die einzelnen Blockteile unabhängig voneinander beheizen und sind die Zwischenstücke und Abstützelemente aus einem schlecht wärmeleitenden Material gefertigt. Darüberhinaus sind die Zwischenstücke und Abstützelemente mit einem zapfenförmigen Ansatz versehen, um die gegenseitige Positionierung der einzelnen Blockteile zu kontrollieren und vorteilhafterweise so zu beeinflussen, dass die Bohrungen für die Nadel der Nadelverschlussanordnung und die Förderkanäle unter thermischer Belastung nicht wesentlich gegeneinander verschoben werden.

Im folgenden soll die Erfindung anhand eines Ausführungsbeispiels und der Figur näher erläutert werden. Es zeigt:

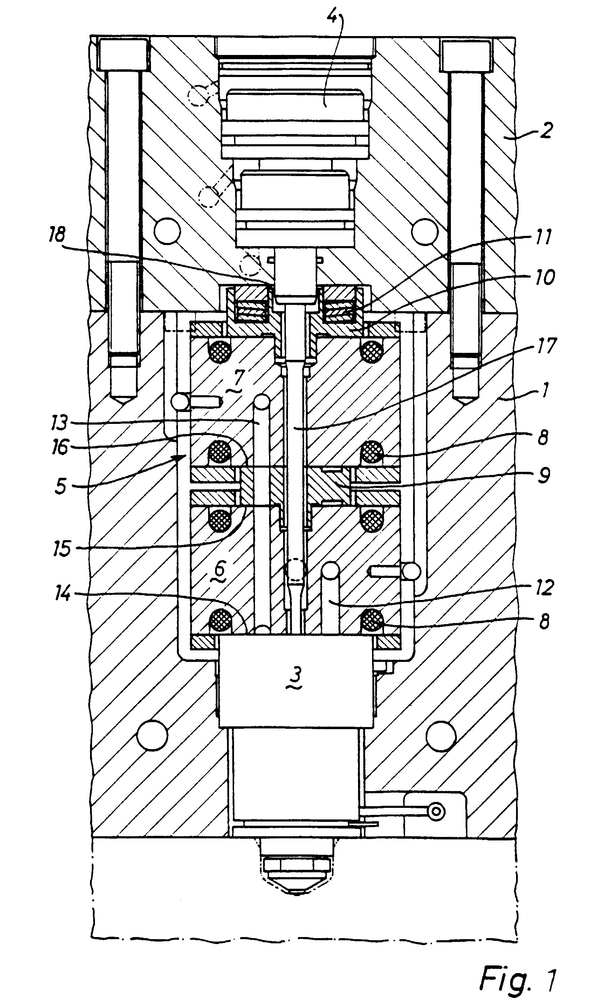

- Fig. 1:: einen Schnitt durch eine erfindungsgemässe Heisskanal-Verteilerblockanordnung.

Aus dem in Figur 1 dargestellten Querschnitt durch die Heissläuferplatte 1 am Ort einer mit einem Nadelventil 4 schliessbaren Heisskanaldüse 3 ist der Aufbau der Heissläuferblockanordnung 5 ersichtlich. Diese weist einen düsenseitigen Blockteil 6 und einen maschinenseitigen Blockteil 7 auf. Für die Förderung von verschiedenen Materialkomponenten sind in diesen Blockteilen Förderkanäle 12 und 13 vorgesehen. Bei der Herstellung von mehrschichtigen Formlingen, insbesondere solchen aus PET (Polyethylenterephtalat), die im Innern eine Sperrschicht aus EVOH (Ethylenvinylhydroxid) aufweisen, werden die beiden Blockteile 6,7 durch Heizelemente 8 auf die für diese Kunststoffmaterialien erforderlichen Verarbeitungstemperaturen gehalten. Dabei führt der düsenseitige Blockteil 6 bspw. das für die Aussenseite der zu spritzenden Formlinge vorgesehene heissere Material, und führt der maschinenseitige Blockteil 7 das im Innern der herzustellenden Formlinge vorgesehene kühlere Material. Für das genannte Produkt aus PET und EVOH muss der düsenseitige Blockteil 6 auf ca. 280°C gehalten werden und weist der maschinenseitige Blockteil 7 eine Temperatur von ca. 200°C auf.
Um eine möglichst homogene Temperaturverteilung innerhalb des jeweiligen Blockteils 6, 7 in einfacher Weise aufrechterhalten zu können, werden diese mit einem Zwischenstück 9 voneinander beabstandet. Dieses Zwischenstück ist aus einem Material mit einer schlechten Wärmeleitfähigkeit gefertigt, bspw. aus Titan oder rostfreiem Stahl. Ein maschinenseitiges Abstützelement 10 weist erfindungsgemäss mehrere Federelemente, insbesondere Tellerfedern 11 auf, und ist im kalten Zustand um ca. 0.45 mm von einer Kopfplatte 2 beabstandet. Durch diese Tellerfedern 11 kann gewährleistet werden, dass auch im kalten Zustand die Düsen mit dem erforderlichen Anpressdruck auf das Formwerkzeug aufgespannt werden können und erhöht sich dieser Anpressdruck beim Aufheizen der Verteilerblockanordnung 5 auf maximal 3.5 Tonnen pro Düse. Dieser durch die Tellerfeder 11 erzeugte Anpressdruck gewährleistet, dass keine Leckagen an einer ersten Stossfläche 14 zwischen Heisskanaldüse 3 und düsenseitigem Blockteil 6, resp. einer zweiten Stossfläche 15 zwischen düsenseitigem Blockteil 6 und Zwischenstück 9, resp. einer dritten Stossfläche 16 zwischen dem Zwischenstück 9 und dem maschinenseitigen Blockteil 7 auftreten. Durch die thermische Expansion der beiden Heissläuferblockteile 6, 7 und des Zwischenstücks 9 verringert sich der Abstand zwischen Abstützelement 10 und der Kopfplatte 2 und braucht das Abstützelement 10 lediglich eine Spannung von ca. 0,5 Tonnen, anstelle von 10 bis 12 Tonnen aufzunehmen und zu übertragen. Die restliche Spannung wird von der Tellerfeder 11 aufgenommen und übertragen.

Die Nadelverschlussanordnung 4 weist zwei übereinander angeordnete Kolben auf, mit denen die Nadel 17 in verschiedene Positionen gebracht werden kann. In der am weitesten vorgeschobenen Position verschliesst die Nadel 17 den Ausgang der Düse 3 vollständig. In einer ersten zurückgezogenen Position gibt die Nadel 17 einen ersten Zufuhrkanal 12 frei und ermöglicht dem darin geführten Material in den Formraum zu fliessen. In einer zweiten weiter zurückversetzten Position gibt die Nadel 17 einen zweiten Förderkanal 13 frei und ermöglicht dem in diesem Kanal geförderten Material in den Formraum zu gelangen. Solche Verschlussanordnungen sind im wesentlichen bekannt und nicht Gegenstand der vorliegenden Erfindung.

Um mit der vorliegenden Verteilerblockanordnung solche Nadelverschlussanordnungen verwenden zu können, muss gewährleistet werden, dass sich die einzelnen Bohrungen, in denen die Nadel 17 geführt wird, bei unterschiedlicher thermischer Ausdehnung nicht gegenseitig verschieben. Dazu wird das Zwischenstück 9 und das Abstützelement 10 mit einem zapfenartigen Vorsprung versehen, der in entsprechende Ausnehmungen in den einzelnen Blockteilen 6,7 eingreift. Damit kann sichergestellt werden, dass sich die einzelnen Blockteile 6,7 bei thermischer Belastung im wesentlichen axial zur Nadel 17 verschieben und die Relativverschiebungen quer zur Nadelrichtung den Verlauf der Bohrungen nicht beeinträchtigen.

Dieser modulartige Aufbau erlaubt es, die einzelnen Blockteile 6,7 mit Heizelementen 8 auf unterschiedliche Temperaturen zu bringen ohne dadurch Materialspannungen zu erzeugen, die entweder zu Lekagen oder zur Zerstörung der Verteilerblockanordnung führen. Die thermisch bedingten Relativverschiebungen werden durch den zapfenförmigen Ansatz des Zwischenstücks 9 und des Absstützelementes 10 kontrolliert.

Darüber hinaus können für die Herstellung von Formlingen aus drei und mehr unterschiedlichen Materialien mehrere Blockteile hintereinander angeordnet werden, die jeweils durch Zwischenstücke voneinander getrennt werden. Die Spaltbreite zwischen Abstützelement und Kopfplatte resp. die Federkraft des Federlementes können vom Fachmann entsprechend dimensioniert werden. Es versteht sich, dass die Führung der Förderkanäle der speziellen Düsenkonstruktion angepasst werden kann.

## Patentansprüche

1. Heisskanal-Koinjektions-Verteilerblockanordnung aus mehreren Blockteilen (6, 7) für eine Heissläuferplatte (1) eines Mehrfach-Heisskanal-Koinjektions-Werkzeugs zum Spritzgiessen von mehrschichtigen Formlingen, insbesondere von zum Blasrecken geeigneten Vorformlingen, mit einer Vielzahl von Heisskanaldüsen (3), die je mit einer Nadel (17) eines Nadelverschlusses (4) verschliessbar sind, welche Heissläuferplatte (1) lösbar mit einer Kopfplatte (2) verbunden ist, wobei zwischen den einzelnen Blockteilen (6, 7) der Verteilerblockanordnung ein axial zur Nadel (17) jedes Nadelverschlusses (4) angeordnetes Zwischenstück (9) vorgesehen ist, durch welches mindestens ein Förderkanal (13) und die Nadel (17) hindurch geführt ist, und wobei zwischen dem kopfplattenseitigen Blockteil (7) und der Kopfplatte (2) ein axial zur Nadel (17) jedes Nadelverschlusses (4) angeordnetes Abstützelement (10) vorgesehen ist, dadurch gekennzeichnet, dass der düsenseitige Blockteil (6) auf der Heissläuferplatte (1) gleitend abgestützt ist und die Blockteile (6, 7) im gesamten Verteilerblockbereich gegeneinander verschiebbar sind, dass zwischen jedem Abstützelement (10) und der Kopfplatte (2) mindestens ein Federelement (11) vorgesehen ist, welches das Abstützelement (10) im kalten Betriebszustand um eine Spaltbreite (18) von der Kopfplatte (2) beabstandet, welche Spaltbreite (18) der thermischen Ausdehnung der gesamten Verteilerblockanordnung in Nadelrichtung bei heissem Betriebszustand entspricht und welches Federelement (11) derart angeordnet und dimensioniert ist, dass dieses eine parallel zur Nadelrichtung wirkende Anpresskraft ausübt, welche sowohl bei kaltem als auch bei heissem Betriebszustand die Stossflächen (14, 15, 16) zwischen Heisskanaldüse (3) und Formkavität, resp. zwischen Heisskanaldüse (3) und düsenseitigem Blockteil (6), resp. zwischen den Blockteilen (6, 7) und dem jeweiligen Zwischenstück (9), druckfest abschliesst und welches Federelement (11) einen maximalen Federweg aufweist, welcher der Spaltbreite (18) entspricht.

2. Verteilerblockanordnung gemäss Anspruch 1, dadurch gekennzeichnet, dass das Federelement (11) eine Tellerfeder ist.

3. Verteilerblockanordnung gemäss Anspruch 1 oder 2, dadurch gekennzeichnet, dass das Federelement (11) bei einer Auslenkung von mindestens 0.4 mm eine Kraft von mindestens 19 600 N (2 Tonnen) ausübt.

4. Verteilerblockanordnung gemäss Anspruch 1 bis 3, dadurch gekennzeichnet, dass diese zwei Blockteile (6, 7) aufweist.

5. Verteilerblockanordnung gemäss Anspruch 4, dadurch gekennzeichnet, dass diese Blockteile (6, 7) unabhängig voneinander beheizbar sind.

6. Verteilerblockanordnung gemäss Anspruch 1 bis 5, dadurch gekennzeichnet, dass das Zwischenstück (9) aus einem schlecht wärmeleitenden Material gefertigt ist.

7. Verteilerblockanordnung gemäss Anspruch 6, dadurch gekennzeichnet, dass das Zwischenstück (9) durch einen zapfenförmigen Ansatz axialsymmetrisch zur Nadel (17) zwischen den Blockteilen (6,7) angeordnet ist.

8. Verteilerblockanordnung gemäss Anspruch 1, dadurch gekennzeichnet, dass das Abstützelement (10) aus einem schlecht wärmeleitenden Material gefertigt ist.

9. Verteilerblockanordnung gemäss Anspruch 8, dadurch gekennzeichnet, dass das Abstützelement (10) durch einen zapfenförmigen Ansatz axialsymmetrisch zur Nadel (17) zwischen dem Blockteil (7) und der Kopfplatte (2) angeordnet ist.

10. Verteilerblockanordnung gemäss einem der Ansprüche 1 bis 9, dadurch gekennzeichnet, dass diese mit 48 oder mehr Heisskanaldüsen (3) ausgerüstet ist.

## Claims

1. A hot-runner coinjection distributor block arrangement made of several block parts (6, 7) for a hot-runner plate (1) of a multiple hot-runner coinjection tool for injection moulding multi-layered mouldings, in particular preform blanks suitable for stretch-blow moulding, with a multitude of hot-runner nozzles (3) which in each case can be closed with a needle (17) of a needle closure system (4), said hot-runner plate (1) being releasably connected to a head plate (2), wherein between the individual block parts (6, 7) of the distributor block arrangement there is provided an intermediate piece (9) which is arranged axially to the needle (17) of each needle closure system (4) and through which intermediate piece (9) there is passed at least one feed channel (13) and the needle (17), and wherein between the block part (7) on the head plate side and the head plate (2) there is provided a support element (10) arranged axial to the needle (17) of each needle closure system (4), characterised in that the block part (6) on the nozzle side is slidingly supported on the hot-runner plate (1) and the block parts (6, 7) in the whole distributor block region are displaceable against one another, that between each support element (10) and the head plate (2) there is provided at least one spring element (11) which spaces the support element (10) in the cold operating mode from the head plate (2) by a gap width (18), said gap width (18) corresponding to the thermal expansion of the whole distributor block arrangement in the needle direction in the hot operating mode and said spring element (11) being arranged and dimensioned in a manner such that this exerts a contact pressure force which acts parallel to the needle direction and which, in the cold as well as in the hot operating mode, pressure-tightly closes the abutting surfaces (14, 15, 16) between the hot-runner nozzle (3) and mould cavity, or between the hot-runner nozzle (3) and block part (6) on the nozzle side, or between the block parts (6, 7) and the respective intermediate piece (9) and said spring element (11) having a maximum spring travel stroke which corresponds to the gap width (18).

2. A distributor block arrangement according to claim 1, characterised in that the spring element (11) is a disc spring.

3. A distributor block arrangement according to claim 1 or 2, characterised in that the spring element (11) with a deflection of at least 0.4 mm exerts a force of at least 19600 N (2 tons).

4. A distributor block arrangement according to claim 1 to 3, characterised in that this comprises two block parts (6, 7).

5. A distributor block arrangement according to claim 4, characterised in that these block parts (6, 7) can be heated independently of one another.

6. A distributor block arrangement according to claim 1 to 5, characterised in that the intermediate piece (9) is made of a poor heat-conducting material.

7. A distributor block arrangement according to claim 6, characterised in that the intermediate piece (9) by way of a peg-shaped projection is arranged axially symmetrically to the needle (17) between the block parts (6, 7).

8. A distributor block arrangement according to claim 1, characterised in that the support element (10) is manufactured of a poor heat-conducting material.

9. A distributor block arrangement according to claim 8, characterised in that the support element (10) by way of a peg-shaped projection is arranged axially symmetrically to the needle (17) between the block part (7) and the head plate (2).

10. A distributor block arrangement according to one of the claims 1 to 9, characterised in that this is equipped with 48 or more hot-runner nozzles (3).

## Revendications

1. Dispositif à blocs distributeurs de co-injection par canaux chauds, constitué par plusieurs éléments de blocs (6,7) pour une plaque de chauffage (1) d'un outil multiple de co-injection par canaux chauds pour le moulage par injection d'ébauches à plusieurs couches, notamment d'ébauches préalables convenant pour l'étirage par soufflage, comportant une multiplicité de buses (3) de canal chaud, qui peuvent être fermées chacune par une aiguille (17) d'un dispositif de fermeture à aiguille (4), la plaque de chauffage (1) étant reliée de façon amovible à une plaque de tête (2), et dans lequel entre les éléments de blocs individuels (6,7) du dispositif à blocs distributeurs est prévu un élément intercalaire (9), qui est disposé axialement par rapport à l'aiguille (17) de chaque dispositif de fermeture à aiguille (4) et que traverse au moins un canal de convoyage (13) et l'aiguille (17), et dans lequel un élément d'appui (10) disposé axialement par rapport à l'aiguille (17) de chaque dispositif de fermeture à aiguille (4) est prévu entre l'élément de bloc (7) situé du côté de la plaque de tête et la plaque de tête (2), caractérisé en ce que l'élément de bloc (6) situé du côté buse prend appui en glissement sur la plaque de chauffage (1), et les éléments de blocs (6,7) sont déplaçables l'un par rapport à l'autre dans l'ensemble de la zone des blocs distributeurs, en ce qu'entre chaque élément d'appui (10) et la plaque de tête (2) est prévu au moins un moyen (11), et en ce que, dans l'état de fonctionnement à froid, l'élément d'appui (10) est séparé de la plaque de tête (2) par une largeur de fente (18), laquelle largeur de fente (18) correspond à la dilatation thermique de l'ensemble du dispositif à blocs distributeurs dans la direction de l'aiguille dans l'état de fonctionnement à chaud, lequel moyen de ressort (11) est dimensionné de telle sorte qu'il applique une force de serrage agissant parallèlement à la direction de l'aiguille et qui, aussi bien dans l'état de fonctionnement à froid que dans l'état de fonctionnement à chaud, ferme en résistant à la pression les surfaces d'aboutement (14,15,16) entre une buse de canal chaud (3) et la cavité de moule, respectivement entre une buse de canal chaud (3) et l'élément de bloc (6) situé côté buse, respectivement entre les éléments de blocs (6,7) et l'élément intermédiaire respectif (9), lequel moyen de ressort (11) possède une course de débattement élastique maximale qui correspond à la largeur de fente (18).

2. Dispositif à blocs distributeurs selon la revendication 1, caractérisé en ce que le moyen de ressort (11) est un ressort Belleville.

3. Dispositif à blocs distributeurs selon la revendication 1 ou 2, caractérisé en ce que dans le cas d'une déviation d'au moins 0,4 mm, le moyen de ressort (11) exerce une force d'au moins 19600 N (2 tonnes).

4. Dispositif à blocs distributeurs selon les revendications 1 à 3, caractérisé en ce que ce dispositif comporte deux éléments de blocs (6, 7).

5. Dispositif à blocs distributeurs selon la revendication 4, caractérisé en ce que ces éléments de blocs (6,7) peuvent être chauffés indépendamment l'un de l'autre.

6. Dispositif à blocs distributeurs selon l'une des revendications 1 à 5, caractérisé en ce que l'élément intermédiaire (9) est réalisé en un matériau mauvais conducteur de la chaleur.

7. Dispositif à blocs distributeurs selon la revendication 6, caractérisé en ce que l'élément intermédiaire (9) est disposé par un appendice saillant en forme de téton, dans une disposition à symétrie axiale par rapport à l'aiguille (17) entre les éléments de blocs (6,7).

8. Dispositif à blocs distributeurs selon la revendication 1, caractérisé en ce que l'élément d'appui (10) est réalisé en un matériau qui est mauvais conducteur de la chaleur.

9. Dispositif à blocs distributeurs selon la revendication 8, caractérisé en ce que l'élément d'appui (10) est disposé, par un appendice saillant en forme de téton, dans une disposition à symétrie axiale par rapport à l'aiguille (17) entre l'élément de bloc (7) et la plaque de tête (2).

10. Dispositif à blocs distributeurs selon l'une des revendications 1 à 9, caractérisé en ce que ce dispositif est équipé de 48 buses de canal chaud (3) ou plus.
